# FASCICULE DE BREVET EUROPEEN

(11) **EP 0 524 882 B1**
(45) Date de publication et mention de la délivrance du brevet: **08.03.1995**
(21) Numéro de dépôt: 92402126.4
(22) Date de dépôt: 23.07.1992
(51) Int. Cl.: F01P 11/02, F16K 17/02

(54) **Bouchon de fermeture muni d'une valve de surpression**
Verschlussdeckel mit einem Überdruckventil
Valved closure cap

(30) Priorité: 25.07.1991 FR 9109415
(43) Date de publication de la demande: 27.01.1993
(73) Titulaire: PAUL JOURNEE S.A., F-92707 Colombes Cédex (FR)
(72) Inventeur: Journée, Maurice, F-60240 Reilly (FR)
(74) Mandataire: Lemaire, Marc

(56) Documents cités:
- EP-A- 0 101 339
- FR-A- 1 505 971
- FR-A- 2 221 962
- FR-A- 2 409 436
- FR-A- 2 582 053

## Description

La présente invention concerne un bouchon de fermeture d'un goulot de remplissage d'un composant d'un circuit de refroidissement ou de chauffage.

L'invention concerne plus particulièrement un bouchon de fermeture d'un goulot de remplissage d'un radiateur de véhicule automobile.

On connait de nombreuses conceptions de bouchons de ce type comportant au moins une soupape de surpression et éventuellement une soupape de dépression qui sont intégrées au bouchon afin d'assurer une régulation automatique du niveau de la pression régnant à l'intérieur du circuit de refroidissement en vue de maintenir celle-ci à une valeur correspondant sensiblement à celle de la pression atmosphérique.

En se référant par exemple au cas de la soupape de surpression, l'ouverture est généralement provoquée lorsque l'effort qui est appliqué à son élément de commande par la pression régnant à l'intérieur du circuit de refroidissement du moteur est supérieur à une valeur prédéterminée qui est fonction d'une valeur de tarage d'un organe de rappel en position fermée de la soupape de surpression.

De tels bouchons sont décrits par exemple dans les documents FR-A-2221962 et FR-A-1505971.

Dans les conceptions connues, l'organe de rappel est généralement constitué par un ressort hélicoïdal de compression qui est agencé à l'intérieur du bouchon et dont la raideur élastique détermine le seuil de surpression à l'intérieur du circuit de refroidissement au-delà duquel l'ouverture de la soupape de surpression est provoquée.

On constate à l'usage, que le fonctionnement d'une soupape de surpression de cette conception n'est pas parfaitement fiable du fait d'un vieillissement du ressort hélicoïdal de compression qui est le plus souvent réalisé en métal.

On constate ainsi, au fur et à mesure de l'utilisation du véhicule, une dérive de la valeur de de tarage de la soupape de surpression.

On constate également que la valeur initiale de tarage de la soupape de surpression dépend de la précision de réalisation du ressort de rappel élastique et qu'il est impossible d'éviter une dispersion importante de la raideur de ce type de ressort lorsqu'il est réalisé en grande série.

Afin de remédier à ces inconvénients, l'invention propose un bouchon de fermeture d'un goulot de remplissage d'un composant d'un circuit de refroidissement et/ou de chauffage, notamment d'un radiateur de véhicule automobile, du type comportant une soupape de surpression dont l'ouverture est provoquée lorsque l'effort qui est appliqué à son élément de commande par la pression régnant à l'intérieur du composant est supérieure à une valeur prédéterminée qui est fonction d'une valeur de tarage d'un organe de rappel en position fermée de la soupape de surpression, une chambre de rappel dans laquelle est monté coulissant de manière étanche un piston de commande dont la face d'extrémité agencée à l'extérieur du cylindre est soumise à la pression régnant à l'intérieur du composant ladite face d'extrémité du piston de commande coopérant avec un siège de soupape formé dans le goulot pour constituer ladite soupape de surpression, caractérisé en ce que ledit organe de rappel est un ressort à gaz comprenant un cylindre agencé sur la face interne d'un couvercle et en ce que le piston de commande est un piston creux qui délimite une seconde chambre dans laquelle est monté coulissant de manière étanche un second piston dont la face d'extrémité agencée à l'extérieur de la seconde chambre est soumise à ladite pression régnant à l'intérieur du composant.

Selon d'autres caractéristiques de l'invention :
- le bouchon comporte des moyens pour régler la valeur de tarage du ressort à gaz ;
- les moyens de réglage permettent de faire varier le volume de la chambre de rappel du ressort à gaz.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique simplifiée en coupe axiale d'un bouchon ;
- la figure 2 est une vue schématique simplifiée en coupe axiale d'un bouchon de fermeture réalisé conformément aux enseignements de l'invention ; et
- les figures 3 et 4 sont des vues similaires à celles de la figure 2 qui illustrent les différents composants du bouchon dans des positions successives de fonctionnement.

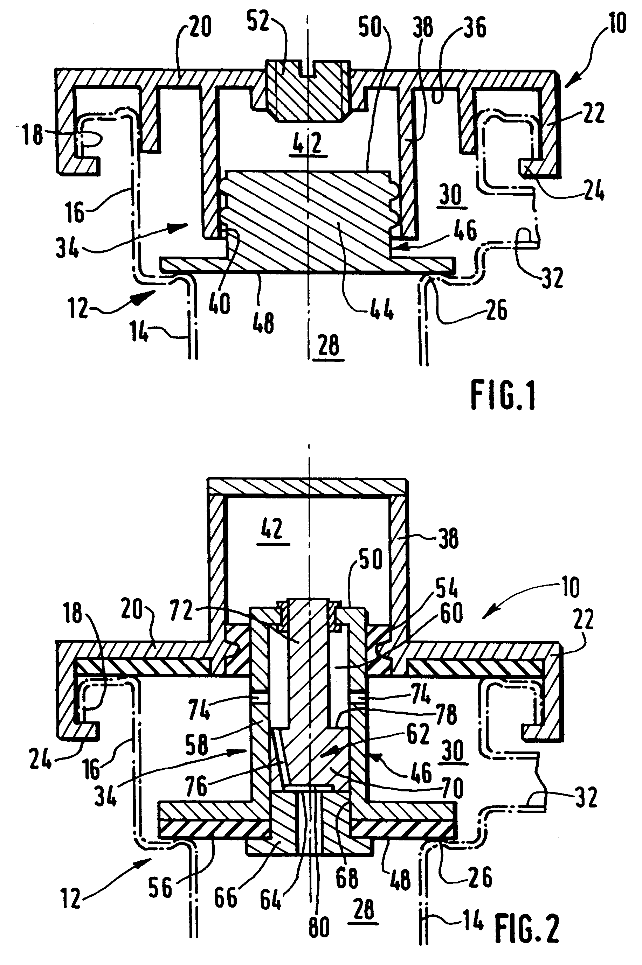

On a illustré à la figure 1 un bouchon 10 prévu pour assurer la fermeture d'un goulot 12 d'un composant d'un circuit de refroidissement et/ou de chauffage.

Le goulot 12 est par exemple le goulot de remplissage du radiateur du circuit de refroidissement d'un moteur d'un véhicule à combustion interne (non représenté).

La conception du goulot 12 illustré en silhouette à la figure 1 est classique et est constitué de deux portions successives 14 et 16 de diamètres croissants.

Le bord libre supérieur de la portion de plus grand diamètre 16 est recourbé pour constituer une partie d'accrochage 18 du bouchon 10.

A cet effet, le bouchon 10 comporte un fond plat formant couvercle 20 et une jupe latérale 22 munie d'un bord d'accrochage 24.

La zone étagée séparant les portions 14 et 16 délimite un siège de soupape de surpression 26.

L'étage 26 sépare l'espace interne 28 proprement dit du goulot 12 d'une partie supérieure 30 qui, selon une conception connue, est mise en communication avec l'atmosphère par un canal latéral 32.

Le bouchon 10 comporte une soupape de surpression 34 dont l'élément élastique de tarage est constitué par un ressort à gaz.

A cet effet, la face radiale interne 36 du couvercle 20 est munie d'une paroi cylindrique annulaire 38 qui s'étend axialement à l'intérieur de la partie supérieure 30 du goulot 12.

Le cylindre formé par la paroi cylindrique annulaire 38 comporte une extrémité ouverte 40 en direction du siège de soupape 26.

La chambre interne 42 du cylindre 38 reçoit en coulissement étanche le corps 44 d'un piston 46 dont la face radiale d'extrémité 48 agencée à l'extérieur de la chambre interne 42 présente un diamètre supérieur à celui du corps 44 de façon à coopérer avec le siège de soupape de surpression 26.

Comme le piston 46 coulisse de manière étanche dans la chambre 42, celle-ci qui est remplie d'un fluide compressible, tel que par exemple de l'air, constitue un ressort à gaz qui sollicite le piston 46 en coulissement axial vers l'extérieur de la chambre 42.

L'effort axial exercé sur la face radiale interieure 50 du piston 46 dépend de la pression régnant à l'intérieur de la chambre 42 qui constitue ainsi une chambre de rappel.

Conformément à une caractéristique de l'invention, il est possible de régler la valeur de cette pression interne à l'aide d'une vis de réglage 52 agencée dans le fond 20 du bouchon 10 dont la pénétration plus ou moins importante à l'intérieur de la chambre 42 fait varier le volume de cette dernière et donc la pression qui y règne.

La valve de surpression 34 qui vient d'être décrite fonctionne d'une manière classique, c'est-à-dire que son ouverture est provoquée lorsque la pression qui règne dans la partie 28 du goulot 12 exerce sur le piston 46 un effort qui est supérieur à celui qu'exerce la pression qui règne dans la chambre de rappel 42 sur la face radiale d'extrémité intérieure 50 du piston 46.

Lorsque ces conditions sont réunies, la face radiale extérieure 48 du piston 46 se soulève du siège de soupape 26 pour provoquer l'évacuation de la surpression dans la partie supérieure 30 du goulot 12 puis par le canal 32 de mise à l'atmosphère.

On a ainsi réalisé une soupape de surpression 34 dont le rappel élastique en position fermée est assuré par un ressort à gaz.

Dans le mode de réalisation selon l'invention, illustré aux figures 2 à 4, les mêmes composants que ceux du mode de réalisation de la figure 1 ont été désignés par les mêmes chiffres de référence.

Afin de permettre une course axiale plus importante du piston principal de commande 46, la chambre de rappel 42 est agencée à l'extérieur du corps du bouchon 10, la paroi annulaire cylindrique 38 venue de matière avec le couvercle 20 étant disposée à cet effet à l'extérieur du bouchon 10.

Le piston principal 46 coulisse de manière étanche dans la chambre 42 avec interposition d'une garniture d'étanchéité 54 tandis que sa face radiale d'extrémité extérieure 48 est également munie d'une garniture d'étanchéité 56.

Dans ce mode de réalisation, le piston 46 est un piston cylindrique creux dont la paroi annulaire cylindrique 58 délimite une seconde chambre interne ou de rappel 60.

Un second piston 62 est monté coulissant axialement dans la seconde chambre de rappel 60.

Dans la position de repos illustrée à la figure 2, la face radiale d'extrémité extérieure 64 du piston 62 est en appui axial contre la face en vis-à-vis d'une virole de butée 66 montée dans l'alésage interne 68 du piston principal creux 46.

Le piston secondaire 62 est un piston étagé qui comporte un premier étage 70 qui coulisse de manière étanche dans l'alésage 68 et donc dans la chambre secondaire 60 et un étage d'extrémité intérieure 72 de plus petit diamètre qui est monté coulissant de manière étanche à travers la face radiale d'extrémité intérieure 50 du premier piston 46.

La paroi cylindrique annulaire 58 du premier piston 46 comporte une série d'orifices radiaux 74 agencés dans un même plan axial qui mettent en communication la chambre interne secondaire 60 avec la partie supérieure 30 du goulot 12 et donc avec le canal de mise à l'air libre 32.

Les orifices 74 sont disposés axialement de manière que la chambre 60 soit en communication avec l'atmosphère lorsque le second piston 62 est dans sa position de repos illustrée à la figure 2.

Le second piston 62 comporte enfin un passage 76 qui relie sa face radiale d'extrémité extérieure 64 avec l'épaulement radial intérieur 78 qui sépare les deux portions de diamètre étagé 70 et 72 du second piston 62.

La face radiale d'extrémité 64 du second piston 62 comporte un lamage 80 de manière que le passage 76 soit toujours en communication avec le perçage central de la virole 66, y compris lorsque la face est en appui axial contre la virole 66.

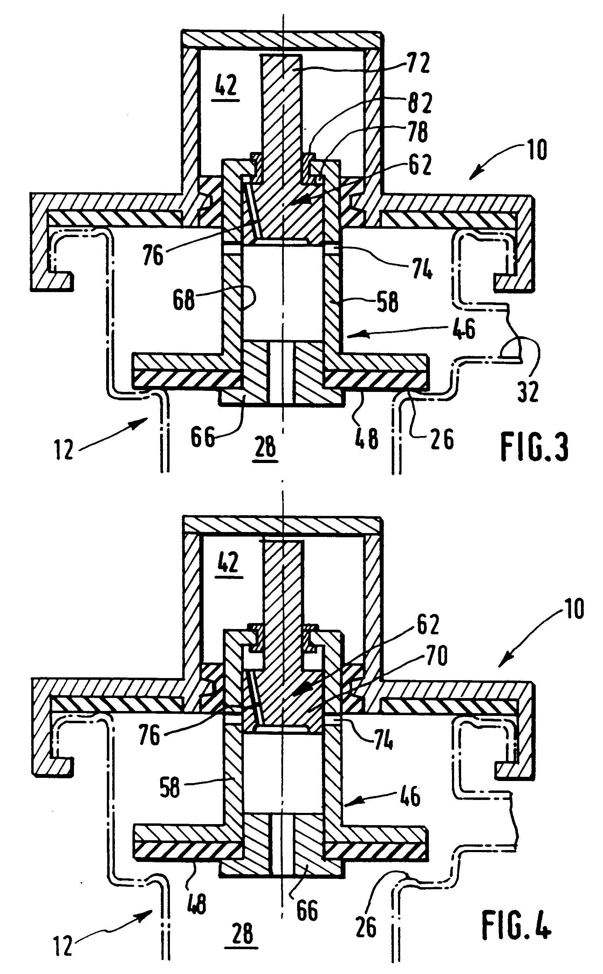

Dans la position illustrée à la figure 3, le second piston 62 est illustré dans sa seconde position extrême axiale dans laquelle l'épaulement 78 est en appui axial contre la garniture 82 qui assure l'étanchéité de la portion 72.

Dans cette même position, on note que le positionnement axial des orifices 74 est tel que l'intérieur 28 du goulot 12 communique directement avec le canal de mise à l'air libre 32 à travers la virole 66, l'alésage interne 68 du piston principal de commande 46, et les orifices 74.

Enfin, dans la position illustrée à la figure 4, le piston principal 46 est illustré dans une position dans laquelle la face radiale d'extrémité 48 est décollée du siège de surpression 26 et dans laquelle les orifices 74 sont obturés par la paroi latérale cylindrique 58 de la portion de plus grand diamètre 70 du piston 62.

On décrira maintenant le fonctionnement du second mode de réalisation en se référant aux figures 2 à 3.

Lorsque l'ensemble des composants occupent leur position respective illustrée à la figure 2, il existe une communication directe entre la partie interne 28 du goulot 12 et le canal de mise à l'air libre 32 à travers la virole 66 et le passage de section réduite 76 ainsi que par les orifices 74.

Dans cette position, il se produit un rééquilibrage automatique des pressions entre l'intérieur et l'extérieur pour des faibles variations de la pression régnant dans la partie 28 du goulot 12 et ceci quel que soit le sens de variation de cette pression.

Dès que la pression à l'intérieur du goulot augmente de manière suffisamment rapide et importante, le piston 62 se déplace axialement vers le haut, en considérant les figures, sous l'action de la pression qui agit sur sa face radiale d'extrémité extérieure 64.

En effet, une légère surpression peut provoquer le déplacement axial du piston 62 car la chambre interne secondaire 60 n'est pas étanche et ne constitue donc pas, dans cette position, un ressort à gaz s'opposant au déplacement du piston 62.

Si l'augmentation de la pression dans la partie 28 est progressive, le déplacement du piston 62 se poursuit axialement jusqu'à ce que le piston 62 vienne occuper progressivement sa position axiale d'extrémité illustrée à la figure 3, le gaz initialement emprisonné dans la seconde chambre 60 étant évacué par le passage 76 dans l'alésage 68.

Dans cette même position, et en cas de surpression plus importante dans le goulot, c'est l'effet de la pression qui règne dans le goulot qui s'applique alors sur la face radiale d'extrémité 48 du premier piston 46 qui est prépondérante et qui provoque le soulèvement de cette dernière du siège 26, le piston 62 occupant alors la position relative illustrée à la figure 4 dans laquelle les orifices 74 sont obturés par la paroi latérale cylindrique de la portion de plus grand diamètre 70 du second piston, la chambre 42 remplissant alors son rôle initial de ressort à gaz pour le piston principal 46.

## Revendications

1. Bouchon de fermeture (10) d'un goulot de remplissage (12) d'un composant d'un circuit de refroidissement et/ou de chauffage, notamment d'un radiateur de véhicule automobile, du type comportant une soupape de surpression (34) dont l'ouverture est provoquée lorsque l'effort qui est appliqué à son élément de commande (48) par la pression régnant à l'intérieur du composant est supérieure à une valeur prédéterminée qui est fonction d'une valeur de tarage d'un organe de rappel en position fermée de la soupape de surpression, une chambre de rappel (42) dans laquelle est monté coulissant de manière étanche un piston de commande (46) dont la face d'extrémité (48) agencée à l'extérieur du cylindre (38) est soumise à la pression régnant à l'intérieur du composant (28) ladite face d'extrémité (48) du piston de commande (46) coopérant avec un siège de soupape (26) formé dans le goulot (12) pour constituer ladite soupape de surpression, caractérisé en ce que ledit organe de rappel est un ressort à gaz (42, 46) comprenant un cylindre (38) agencé sur la face interne (36) d'un couvercle (20) et en ce que le piston de commande (46) est un piston creux qui délimite une seconde chambre (60) dans laquelle est monté coulissant de manière étanche un second piston (62) dont la face d'extrémité (64) agencée à l'extérieur de la seconde chambre (60) est soumise à ladite pression régnant à l'intérieur du composant (28).

2. Bouchon selon la revendication 1, caractérisé en ce que la paroi cylindrique annulaire (58) du premier piston creux (46) comporte un orifice transversal (74) qui met en communication ladite seconde chambre (60) avec une portion (30) du goulot qui est située en aval de la valve de surpression et qui est elle-même (30) reliée à la pression atmosphérique (32), ledit orifice (74) étant agencé axialement de manière à être obturé par la paroi latérale cylindrique du second piston (62) au-delà d'une course axiale prédéterminée de ce dernier à l'intérieur de la seconde chambre (60), et en ce que la face extérieure d'extrémité (64) du second piston est reliée à la seconde chambre par un passage (76) formé dans le piston.

3. Bouchon de fermeture selon l'une quelconque des revendications précédentes, caractérisé en ce qu'il comporte des moyens (52) pour régler la valeur de tarage du ressort à gaz.

4. Bouchon de fermeture selon la revendication 3, caractérisé en ce que lesdits moyens de réglage permettent de faire varier le volume de la chambre de rappel (42).

## Claims

1. A filler cap (10) for a filling pipe (12) of a component of a cooling and/or heating circuit, especially a motor vehicle radiator, of the type having a pressure relief valve (34), opening of which is caused when the force which is applied to its control element (48) by the pressure prevailing within the component is greater than a predetermined value which is a function of a calibration value of a return member in the closed position of the pressure relief valve, a return chamber (42) in which there is mounted, for sealed sliding movement, a control piston (46), the end face (48) of which, disposed outside the cylinder (38), is subjected to the pressure prevailing within the component (28), with the said end face (48) of the control piston (46) cooperating with a relief valve seat (26) formed in the filling pipe (12) so as to constitute the said pressure relief valve, characterised in that the said return member is a gas spring (42, 46) comprising a cylinder (38) arranged on the internal face (36) of a cover member (20), and in that the control piston (46) is a hollow piston which delimits a second chamber (60) in which there is mounted, for sealed sliding movement, a second piston (62), the end face (64) of which, arranged outside the second chamber (60) is subjected to the said pressure prevailing within the component (28).

2. A filler cap according to Claim 1, characterised in that the annular cylindrical wall (58) of the hollow first piston (46) includes a transverse orifice (74) which brings the said second chamber (60) into communication with a portion (30) of the filling pipe which lies downstream of the pressure relief valve, and which is itself (30) connected to atmospheric pressure (32), the said orifice (74) being arranged axially in such a way as to be covered by the cylindrical side wall of the second piston (62) beyond a predetermined axial travel of the latter within the second chamber (60), and in that the outer end face (64) of the second piston is connected to the second chamber through a duct (76) formed in the piston.

3. A filler cap according to either one of the preceding Claims, characterised in that it includes means (52) for adjusting the calibration value of the gas spring.

4. A filler cap according to Claim 3, characterised in that the said adjusting means enable the volume of the return chamber (42) to be varied.

## Patentansprüche

1. Verschlußdeckel (10) für einen Einfüllstutzen (12) eines Bestandteils eines Kühl- und/oder Heizkreislaufs, insbesondere eines Kraftfahrzeugkühlers, enthaltend ein Überdruckventil (34), dessen Öffnung bewirkt wird, wenn die Kraft, die durch den im Innern des Bestandteils herrschenden Druck auf sein Betätigungselement (48) ausgeübt wird, größer als ein vorbestimmter Wert ist, der von einem Einstellwert eines Rückstellorgans für die Rückstellung des Überdruckventils in Schließstellung abhängig ist, sowie eine Rückstellkammer (42), in der dicht verschiebbar ein Betätigungskolben (46) eingebaut ist, dessen außerhalb des Zylinders (38) angeordnete Endfläche (48) dem im Innern des Bestandteils (28) herrschenden Druck ausgesetzt ist, wobei diese Endfläche (48) des Betätigungskolbens (46) mit einem Ventilsitz (26) zusammenwirkt, der im Stutzenhals (12) vorgesehen ist, um das Überdruckventil zu bilden , **dadurch gekennzeichnet,** daß es sich bei dem Rückstellorgan um eine Gasfeder (42, 46) handelt, die einen an der Innenfläche (36) eines Deckels (20) angeordneten Zylinder (38) enthält, und daß der Betätigungskolben (46) ein Hohlkolben ist, der eine zweite Kammer (60) begrenzt, in der dicht verschiebbar ein zweiter Kolben (62) eingebaut ist, dessen außerhalb der zweiten Kammer (60) angeordnete Endfläche (64) dem im Innern des Bestandteils (28) herrschenden Druck ausgesetzt ist.

2. Verschlußdeckel nach Anspruch 1 , **dadurch gekennzeichnet,** daß die ringförmige zylindrische Wand (58) des ersten Hohlkolbens (46) eine Queröffnung (74) aufweist, welche die zweite Kammer (60) mit einem Abschnitt (30) des Stutzenhalses in Verbindung setzt, der sich hinter dem Überdruckventil befindet und der selbst (30) wiederum mit dem atmosphärischen Druck (32) verbunden ist, wobei die Öffnung (74) axial so angeordnet ist, daß sie durch die zylindrische Seitenwand des zweiten Kolbens (62) bei Überschreitung eines vorbestimmten axialen Hubs dieses Kolbens im Innern der zweiten Kammer (60) verschlossen wird, und daß die äußere Endfläche (64) des zweiten Kolbens über einen im Kolben vorgesehenen Durchlaß (76) mit der zweiten Kammer verbunden ist.

3. Verschlußdeckel nach einem der vorangehenden Ansprüche , **dadurch gekennzeichnet,** daß er Mittel (52) für die Regelung des Einstelldrucks der Gasfeder umfaßt.

4. Verschlußdeckel nach Anspruch 3 , **dadurch gekennzeichnet,** daß die genannten Regelungsmittel eine Veränderung des Volumens der Rückstellkammer (42) ermöglichen.
